# FASCICULE DE BREVET EUROPEEN

(11) **EP 1 603 788 B1**
(45) Date de publication et mention de la délivrance du brevet: **20.09.2006**
(21) Numéro de dépôt: 04742272.0
(22) Date de dépôt: 17.03.2004
(51) Int. Cl.: B62D 25/12, B60R 21/34

(54) **BUTEE D ABSORPTION DE CHOC POUR VEHICULE AUTOMOBILE**
STOSSDÄMPFENDER ANSCHLAG FÜR EIN KRAFTFAHRZEUG
SHOCK-ABSORBING STOP FOR A MOTOR VEHICLE

(30) Priorité: 17.03.2003 FR 0303255
(43) Date de publication de la demande: 14.12.2005
(73) Titulaire: Renault s.a.s., 92100 Boulogne Billancourt (FR)
(72) Inventeur: GIRARDI, Lionel, F-78310 Coignières (FR); MANGOLD, Manuel, Seoul (KR); SEYRANIAN, Chaene, Serge, F-78920 Ecquevilly (FR)
(86) Numéro de dépôt international: PCT/FR2004/000654
(87) Numéro de publication internationale: WO 2004/083020

(56) Documents cités:
- EP-A- 1 104 726
- EP-A- 1 277 630

## Description

La présente invention concerne, de façon générale, une butée d'absorption de choc.

Plus particulièrement, l'invention concerne une butée d'absorption de choc pour véhicule automobile, comprenant une base disposée à une première extrémité de la butée, un organe d'amortissement élastiquement déformable disposé à une seconde extrémité de la butée, et un support relié à la base et portant l'organe d'amortissement, ledit support étant apte en cas de compression de la butée à coulisser par rapport à la base selon un axe de compression.

Lors d'un choc avant entre un véhicule automobile et un piéton, la tête de celui-ci vient généralement percuter la carrosserie du véhicule, et touche principalement le capot avant, les montants de baie ou le pare-brise.

C'est la raison pour laquelle de nombreux constructeurs d'automobiles ont développé diverses solutions visant à amortir le choc subi par un piéton percuté par un véhicule automobile, le choc pouvant par exemple être amorti par une butée d'absorption de choc.
Une butée du type précédemment défini, permettant un tel amortissement de chocs, est par exemple décrite dans le document brevet EP 1 104 726 A2 de VOLKSWAGENWERK AG.

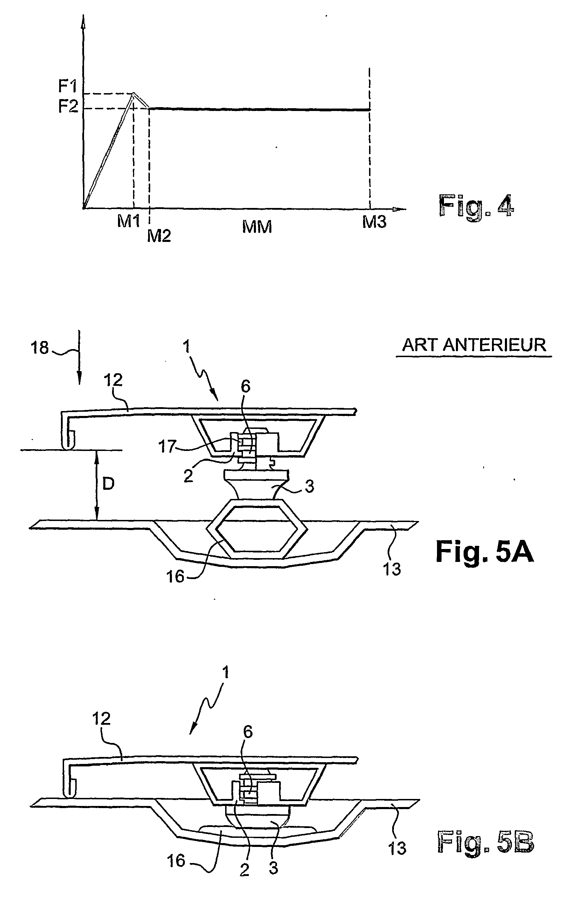

Les figures 5-A et 5-B représentent une butée pour absorption de choc piéton telle que divulguée dans ce document de l'art antérieur. La position avant choc est représentée à la figure 5-A et la position après le choc et après déformation totale de la butée est représentée à la figure 5-B.
La butée 1 de la figure 5-A est disposée sur le capot 12 d'un véhicule et vient en butée contre une structure déformable plastiquement 16 elle-même fixée sur un élément fixe de carrosserie 13 opposé au capot 12 mobile.
Le support 6 qui porte l'organe d'amortissement 3 est de forme cylindrique et vient s'insérer dans une portion tubulaire de forme complémentaire pratiquée dans la base 2. Des épaulements sont disposés à l'intérieur de la portion tubulaire de la base 2 de manière à venir s'insérer dans des gorges 17 de forme complémentaire pratiquées sur la périphérie externe du support 6 cylindrique. Cet assemblage par épaulement et gorges constitue un arrêt en translation du support 6 par rapport à la base 2.
Au moment du choc, le capot 12 à tendance à s'enfoncer en direction de l'élément de carrosserie 13 induisant corrélativement une force sur l'organe d'amortissement 3 qui se déforme élastiquement. Lorsque l'effort appliqué sur le capot 12 est trop important l'organe d'amortissement 3 se déforme complètement et l'arrêt en translation du support 6 de l'organe d'amortissement 3 cède par déformation élastique de ses gorges 17 entraînant le coulissement de l'organe d'amortissement 3 par rapport au support 6.

Cette fusibilité de l'assemblage entre le support 6 et la base 2 permet pour une très faible course du capot d'absorber une partie des efforts résultants du choc piéton.
De même, lors d'un choc piéton, la structure déformable plastiquement 16 qui a la forme d'un hexaèdre se déforme et s'écrase permettant ainsi une fonction d'absorption de choc lors du déplacement du capot 15 par rapport à l'élément fixe de carrosserie 16.
L'absorption de choc se fait donc en deux temps. Dans un premier temps et pour une faible amplitude d'enfoncement du capot, le coulissement du support 6 par rapport à la base 2 permet d'absorber une faible partie de l'énergie générée par le choc. Dans un second temps et pour la plus grande partie de l'amplitude de déplacement du capot, la déformation de la structure déformable 16 plastiquement permet l'absorption d'une autre partie plus importante de l'énergie du choc piéton.

Cette butée de l'art antérieur requiert l'utilisation d'au moins deux moyens distincts d'absorption de choc que sont l'assemblage support /base déformable élastiquement et la structure déformable 16 plastiquement. Ces deux moyens nécessitent un nombre important de pièces et d'usinages augmentant d'autant la complexité et le coût d'une telle butée. De plus, l'évolution de la force résistante à l'enfoncement du capot est difficilement contrôlable car les deux moyens d'absorption de choc interviennent à des instants différents et ont chacun des propriétés mécaniques différentes.

Dans ce contexte, la présente invention a pour but de proposer une butée d'absorption de choc pour véhicule automobile permettant une fonction de butée élastique de maintient du capot en position normale de fermeture, et une fonction d'absorption de choc en cas de choc piéton. L'effort résistant exercé par la buté sur le capot doit être ajusté précisément de manière à limiter l'intensité maximale de la force résistante exercée par le capot sur le piéton au moment du choc.

A cette fin, la butée d'absorption de choc pour véhicule automobile de l'invention, par ailleurs conforme à la définition générique qu'en donne le préambule ci-dessus, est essentiellement caractérisée en ce que le support possède une première surface de frottement rigide apte à frotter sur une seconde surface de frottement rigide de la base lors du mouvement de coulissement du support par rapport à la base, la première surface de frottement étant de forme au moins partiellement complémentaire avec la seconde surface de frottement de manière à ce que le frottement entre ces surfaces se fasse au moins sur la plus grande partie de la course de coulissement du support et permette d'absorber une partie de l'énergie de compression de la butée lors d'un choc.

Les surfaces de frottement rigides permettent l'absorption par frottement d'une partie de l'énergie générée lors du choc piéton. L'utilisation de surfaces de frottement rigides évite l'accumulation d'énergie sous la forme d'une force élastique de rappel. La seule force élastique accumulée par la butée étant liée à la compression de l'organe d'amortissement élastique.
Ainsi, la butée selon l'invention accumule une faible quantité d'énergie élastique ce qui limite l'amplitude de repoussement du capot après son enfoncement et réduit d'autant l'impact du capot lors d'un choc piéton.
Un autre avantage de l'absorption de choc par frottement est de contrôler l'effort maximum admissible par la butée par simple limitation de la surface de frottement effective entre les première et secondes surfaces.

En fonction de l'amplitude de compression de la butée, celle-ci adopte sélectivement une configuration de fermeture et une configuration d'absorption de choc. Le passage de la configuration de fermeture vers la configuration d'absorption de choc se produit lors du mouvement de compression de la butée, lorsque la force de compression exercée sur la butée devient supérieure à la force de frottement résistant au coulissement du support par rapport à la base.

Ainsi lorsque la butée est en configuration de fermeture, la force de compression appliquée sur la butée est insuffisante pour faire coulisser le support par rapport à la base et seul l'organe d'amortissement est déformé élastiquement. Dans cette configuration de fermeture, la butée permet l'absorption de vibrations et de chocs de faibles intensités généralement produits lors du roulage du véhicule ou lors de la fermeture du capot.

En cas de choc ou d'effort important exercé sur la butée, la force de compression de la butée devient supérieure à la force de frottement minimale nécessaire au coulissement du support par rapport à la base. Les premières et secondes surfaces coulissent alors l'une par rapport à l'autre et l'énergie de ce mouvement est absorbée par frottement entre ces surfaces. Pour augmenter la capacité d'absorption d'énergie d'une telle butée, il suffit par exemple d'augmenter la force de frottement minimale autorisant le coulissement relatif des deux surfaces.

Dans un exemple particulier selon l'invention, la base est reliée au support par un moyen fusible sécable, ledit moyen fusible comportant au moins une zone d'affaiblissement apte à être cisaillée par un effort prédéterminé de compression de la butée autorisant ainsi le mouvement de coulissement du support par rapport à la base lorsque la butée subit un effort de compression supérieur ou égal à l'effort prédéterminé.

Ce moyen fusible sécable permet de contrôler précisément l'effort minimum nécessaire au passage de la butée de sa configuration de fermeture à sa configuration d'absorption de choc. Le cisaillement du moyen fusible peut également servir de témoin et indiquer que la butée est déjà passée en configuration d'absorption de choc et devrait dès lors être remplacée.

Dans un autre exemple particulier, les première et seconde surfaces de frottement de formes complémentaires sont cylindriques autour de l'axe de compression et sont ajustées pour être montées serrées lors du coulissement du support par rapport à la base. Plus l'ajustement est serré et plus la butée sera résistante à l'effort de compression et d'enfoncement du capot.

D'autres caractéristiques et avantages de l'invention ressortiront clairement de la description qui en est faite ci-après, à titre indicatif et nullement limitatif, en référence aux dessins annexés, dans lesquels:
la figure 1-A représente une coupe de la butée d'absorption de choc selon l'invention en configuration de fermeture ;
la figure 1-B représente une coupe de la butée d'absorption de choc selon l'invention en configuration d'absorption de choc ;
la figure 2 représente une vue de dessus de la butée d'absorption de choc et de son moyen fusible sécable ;
la figure 3 représente une vue générale d'un véhicule doté d'une butée d'absorption dé choc selon l'invention ;
la figure 4 représente une courbe type d'évolution d'efforts en fonction de l'amplitude de compression de la butée ;
les figures 5-A et 5-B représentent une butée d'absorption de choc de l'art antérieur.

Comme annoncé précédemment, l'invention concerne une butée pour absorption de choc pour véhicule.

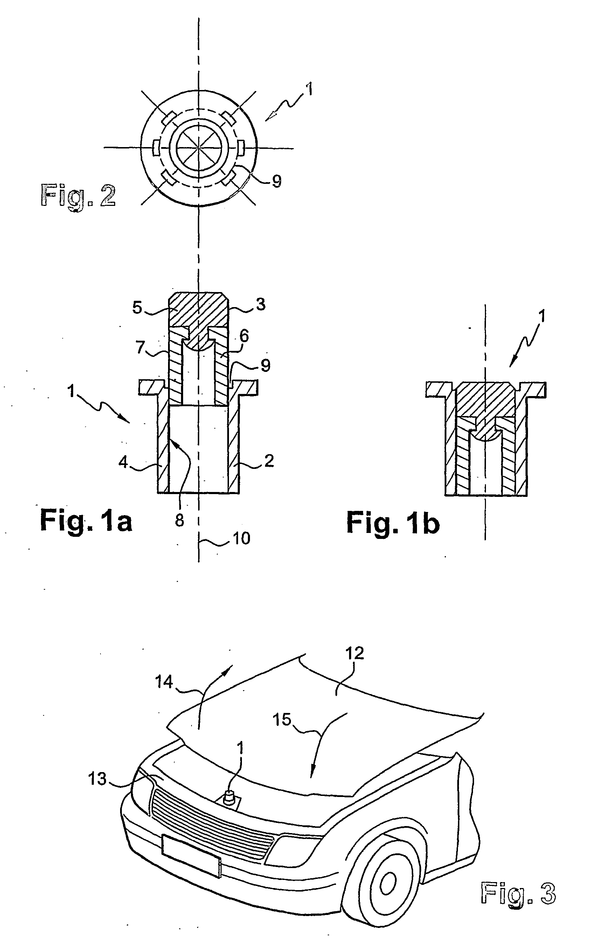

La butée 1 représentée aux figures 1 et 2 comporte une base 2 disposée à la première extrémité 4 de la butée 1, ainsi qu'un organe d'amortissement 3 élastiquement déformable disposé à une seconde extrémité 5 de la butée 1 et un support 6 relié à la base 2 et portant l'organe d'amortissement 3.
L'organe d'amortissement 3 élastiquement déformable est au moins partiellement composé d'un matériau souple et élastique tel qu'un matériau élastomère comme du caoutchouc. Cet organe 3 possède une première raideur K1 et peut également avoir une dureté d'environ 40 newtons/mm² .

Le support 6 et la base 2 sont constitués de tubes cylindriques alignés sur un même axe de symétrie. L'organe d'amortissement 3 généralement cylindrique est assemblé sur le support 6 par emmanchement d'une partie de l'organe 3 dans le support 6 en forme de tube. Le support 6 à un diamètre extérieur inférieur ou égal au diamètre interne de la base 2 de manière à ce que ces deux tubes puissent coulisser l'un dans l'autre sous l'effet d'une force de compression de la butée appliquée sur l'organe d'amortissement et orientée selon l'axe de symétrie du support 6, en direction de la base 2. Préférentiellement la surface extérieure 7 du support 6 et la surface intérieure 8 de la base 2 sont usinées de façon à ce qu'une fois emboîtés l'un dans l'autre ces deux tubes soient assemblés serrés. Préférentiellement au moins une portion de chaque surface de frottement des tubes est usinée pour former un ajustement serré de type p6-H7 ou tout ajustement équivalent permettant la réalisation de l'assemblage serré. Les surfaces ainsi usinées sont prévues pour venir frotter l'une contre l'autre et corrélativement induire une force minimale de frottement d'environ 650 Newtons opposée au coulissement du support 6 par rapport à la base 2.

Les première 7 et seconde 8 surfaces de frottement respectivement usinées sur le support 6 et sur la base 2 peuvent être prévues pour que la force de frottement induite lors du coulissement soit variable en fonction de la course de coulissement du support 6 par rapport à la base 2.

La force de frottement dépend de plusieurs paramètres.

Ainsi la force de frottement augmente avec le serrage de l'assemblage entre les première 6 et seconde 8 surfaces de frottement.

La force de frottement résistant au coulissement augmente également avec la surface effective de contact entre la première 7 et la seconde 8 surface. Pour limiter la surface effective de contact et corrélativement l'intensité de la force résistante au coulissement, l'une des surfaces de frottement a une taille inférieure à la seconde. La surface de frottement la plus petite constituant la limite maximale de la surface effective de contact.
L'état de surface et la nature des matériaux constituant les première 7 et seconde 8 surfaces de frottement est également un paramètre influant la force de frottement résistant au coulissement. Pour cela, la base 2 et le support 6 sont constitués en matériaux rigides tel que du métal ou préférentiellement du plastique comme du Polyamide (PA-6 .6).

Le support 6 est relié à la base par un moyen fusible sécable. Ce moyen fusible est une structure mécanique apte à être cisaillée par l'effort de compression de la butée. Ce moyen fusible 9 peut être réalisé par usinage de la liaison mécanique reliant le tube de base 2 au tube support 6. Ainsi, dans l'exemple représenté aux figures 1-A, 1-B et 2, la base et le support forment une seule pièce cylindrique monobloc. La base et le support sont reliés par une portion de matière fragilisée par usinage pour être sécable par cisaillement.

Une surface d'appui est prévue sur la base 2 pour venir en appui sur un élément de carrosserie 13.

La surface d'appui a la forme d'une collerette circulaire disposée à l'une des extrémités de la base 2 et préférentiellement au niveau de la liaison fusible entre la base 2 et le support 6. Cette surface d'appui est généralement pourvue d'un dispositif de fixation de manière à immobiliser la butée par rapport à l'élément de carrosserie. Préférentiellement le dispositif de fixation est un moyen de fixation par clipsage ce qui permet le démontage et le changement aisé de la butée.

La butée selon l'invention est généralement utilisée pour l'absorption d'un choc d'un piéton sur un capot 12 d'un véhicule à moteur. Le capot 12 est mobile par rapport à l'élément de carrosserie 13, de part et d'autre d'une position de fermeture du capot. La butée 1 est interposée entre le capot 12 et l'élément de carrosserie 13. L'organe d'amortissement 3, en l'absence de choc, est partiellement déformé dans la position de fermeture du capot 12 ce qui permet d'accepter les efforts de faible intensité appliqués sur le capot.

La courbe de la figure 4 représente l'évolution de l'effort résistant au coulissement en fonction de l'amplitude de compression de la butée.
Dans un premier temps, pour une amplitude de compression de la butée allant de 0 mm à M1 mm l'effort résistant augmente de 0 à F1 newtons, proportionnellement à l'amplitude de compression et selon un taux de croissance égal à la raideur K1 de l'organe d'amortissement 3 élastique.
Dans un second temps, au moment du choc piéton, l'effort de compression de la butée devient supérieur à l'effort prédéterminé F1 permettant ainsi le cisaillement et la striction de la zone d'affaiblissement du moyen fusible 9.
Dans un troisième temps, après cisaillement du moyen fusible 9, le support 6 peut alors coulisser par rapport à la base 2. Les première 7 et seconde 8 surfaces de frottement entrent alors en contact l'une contre l'autre faisant ainsi augmenter la valeur de la surface effective de frottement et corrélativement l'intensité de la force de frottement résistant au coulissement.
Dans le cas de la figure 4, après le cisaillement à l'amplitude de compression M1 de la butée et pour un effort prédéterminé F1, la force de frottement F2 opposée au coulissement du support 6 par rapport à la base 2 devient constante tout au long de la course du support et jusqu'à atteindre une amplitude de compression M3 maximale.

## Revendications

1. Butée (1) d'absorption de choc pour véhicule automobile, comprenant une base (2) disposée à une première extrémité (4) de la butée (1), un organe d'amortissement (3) élastiquement déformable disposé à une seconde extrémité (5) de la butée (1), et un support (6) relié à la base (2) et portant l'organe d'amortissement (3), ledit support (6) étant apte en cas de compression de la butée (1) à coulisser par rapport à la base (2) selon un axe de compression (10), **caractérisée en ce que** le support (6) possède une première surface (7) de frottement rigide apte à frotter sur une seconde surface (8) de frottement rigide de la base (2) lors du mouvement de coulissement du support (7) par rapport à la base (2), la première surface (7) de frottement étant de forme au moins partiellement complémentaire avec la seconde surface (8) de frottement de manière à ce que le frottement entre ces surfaces (7, 8) se fasse au moins sur la plus grande partie de la course de coulissement du support (6) et permette d'absorber une partie de l'énergie de compression de la butée (1) lors d'un choc.

2. Butée (1) d'absorption de choc suivant la revendication 1, **caractérisée en ce que** la base (2) est reliée au support (6) par un moyen fusible sécable (9), ledit moyen fusible (9) comportant au moins une zone d'affaiblissement apte à être cisaillée par un effort prédéterminé de compression de la butée (1) autorisant ainsi le mouvement de coulissement du support (6) par rapport à la base (2) lorsque la butée (1) subit un effort de compression supérieur ou égal à l'effort prédéterminé:

3. Butée (1) d'absorption de choc suivant l'une quelconque des revendications 1 et 2, **caractérisée en ce que** les première (7) et seconde (8) surfaces de frottement de formes complémentaires sont cylindriques autour de l'axe de compression (10) et sont ajustées pour être montées serrées lors du coulissement du support (6) par rapport à la base (2).

4. Butée (1) d'absorption de choc suivant l'une quelconque des revendications précédentes, **caractérisée en ce que** la base (2) et le support (6) sont des parties d'une seule pièce monobloc.

5. Butée (1) d'absorption de choc suivant l'une quelconque des revendications précédentes, **caractérisée en ce que** le support (6) a la forme d'un tube axé autour de l'axe de compression (10) et **en ce que** la base (2) comporte une portion de surface d'appui apte à venir en appui sur un élément de carrosserie (13) du véhicule.

6. Butée (1) d'absorption de choc suivant l'une quelconque des revendications précédentes, **caractérisée en ce que** la butée (1) comporte un moyen de fixation par clipsage sur un élément de carrosserie (13).

7. Butée (1) d'absorption de choc suivant l'une quelconque des revendications précédentes, **caractérisée en ce que** l'organe d'amortissement (3) est au moins partiellement composé de matériau élastomère souple.

8. Butée (1) d'absorption de choc suivant l'une quelconque des revendications précédentes, **caractérisée en ce que** la base et le support sont en métal.

9. Application d'une butée (1) suivant l'une quelconque des revendications précédentes à l'absorption d'un choc d'un piéton sur un capot (12) d'un véhicule à moteur, dans laquelle le capot (12) est mobile par rapport à un élément de carrosserie (13), de part et d'autre d'une position de fermeture du capot, la butée (1) étant interposée entre le capot (12) et l'élément de carrosserie (13), et l'organe d'amortissement (3), en l'absence de choc, étant partiellement déformé dans la position de fermeture du capot (12).

## Claims

1. Shock-absorbing stop (1) for a motor vehicle, comprising a housing (2) arranged at a first end (4) of the stop (1), an elastically-deformable damping component (3) arranged at a second end (5) of the stop (1), and a support (6) connected to the housing (2) and carrying the damping component (3), the said support (6) being able, when the stop (1) is under compression, to slide in relation to the housing (2) along a compression axis (10), **characterized in that** the support (6) has a first rigid friction surface (7) able to rub against a second rigid friction surface (8) of the housing (2) when the support (6) travels in a sliding movement in relation to the housing (2), the first friction surface (7) being at least partly complementary in shape to the second friction surface (8) in such a way that the rubbing of these surfaces (7, 8) against each other takes place over most of the length of sliding travel of the support (6), absorbing part of the compression energy of the stop (1) in an impact.

2. Shock-absorbing stop (1) according to Claim 1, **characterized in that** the housing (2) is connected to the support (6) by a mechanical fuse link means (9), the said fuse link means (9) comprising at least one structurally weak zone able to be sheared by a preset compressive load on the stop (1), thus allowing the support (6) to undergo a sliding movement in relation to the housing (2) when the stop (1) is subjected to a compressive load equal to or greater than the preset load.

3. Shock-absorbing stop (1) according to either Claim 1 or 2, **characterized in that** the first (7) and second (8) complementarily shaped friction surfaces are cylindrical about the compression axis (10) and are set so that they fit tightly when the support (6) slides in relation to the housing (2).

4. Shock-absorbing stop (1) according to any one of the preceding claims, **characterized in that** the housing (2) and the support (6) are parts of a single one-piece unit.

5. Shock-absorbing stop (1) according to any one of the preceding claims, **characterized in that** the support (6) is in the form of a tube centred on the compression axis (10) and **in that** the housing (2) includes a bearing surface rotation that can bear a vehicle body element (13).

6. Shock-absorbing stop (1) according to any one of the preceding claims, **characterized in that** the stop (1) includes a dip-fastening means for fastening it to a body element (13).

7. Shock-absorbing stop (1) according to any one of the preceding claims, **characterized in that** the damping component (3) is at least partly composed of a flexible elastomer material.

8. Shock-absorbing stop (1) according to any one of the preceding claims, **characterized in that** the housing and the support are made of metal.

9. Application of a shock-absorbing stop (1) according to any one of the preceding claims for absorbing the impact of a pedestrian against the bonnet (12) of a motor vehicle, in which the bonnet (12) is able to move in relation to a body element (13), either side of the closed position of the bonnet, the stop (1) being interposed between the bonnet (12) and the body element (13), and the damping component (3), in the absence of any impact, being partly deformed in the closed position of the bonnet (12).

## Patentansprüche

1. Anschlag (1) zum Stoßabsorbieren für ein Kraftfahrzeug, der mindestens eine Basis (2) aufweist, die an einem ersten Ende (4) des Anschlags (1) angeordnet ist, ein elastisches verformbares Dämpforgan (3), das an einem zweiten Ende (5) des Anschlags (1) angeordnet ist, und einen Träger (6), der mit der Basis (2) verbunden ist und das Dämpforgan (3) trägt, wobei der Träger (6) beim Zusammendrücken des Anschlags (1) in Bezug auf die Basis (2) entlang einer Kompressionsachse (10) gleiten kann, **dadurch gekennzeichnet, dass** der Träger (6) eine erste starre Reibungsoberfläche (7) aufweist, die auf einer zweiten starren Reibungsoberfläche (8) der Basis (2) bei der Gleitbewegung des Trägers (6) in Bezug auf die Basis (2) reiben kann, wobei die erste Reibungsoberfläche (7) eine Form hat, die zumindest teilweise zu der zweiten Reibungsoberfläche (8) komplementär ist, so dass das Reiben zwischen diesen Oberflächen (7, 8) zumindest auf dem größten Teil des Gleithubs des Trägers (6) erfolgt und es erlaubt, einen Teil der Kompressionsenergie des Anschlags (1) bei einem Aufprall zu absorbieren.

2. Anschlag (1) zum Stoßabsorbieren nach Anspruch 1, **dadurch gekennzeichnet, dass** die Basis (2) mit dem Träger (6) durch ein trennbares Sicherungsmittel (9) verbunden ist, wobei das Sicherungsmittel (9) mindestens eine Schwächungszone aufweist, die von einer vorbestimmten Kompressionskraft des Anschlags (1) durchschert werden kann und daher die Gleitbewegung des Trägers (6) zu der Basis (2) erlaubt, wenn der Anschlag (1) einer Kompressionskraft ausgesetzt ist, die größer oder gleich der vorbestimmten Kraft ist.

3. Anschlag (1) zum Stoßabsorbieren nach einem der vorhergehenden Ansprüche 1 und 2, **dadurch gekennzeichnet, dass** die erste (7) und die zweite (8) Reibungsoberfläche mit komplementären Formen um die Kompressionsachse (10) zylindrisch sind und justiert sind, um eng beim Gleiten des Trägers (6) in Bezug auf die Basis (2) montiert zu sein.

4. Anschlag (1) zum Stoßabsorbieren nach einem der vorhergehenden Ansprüche, **dadurch gekennzeichnet, dass** die Basis (2) und der Träger (6) Teile eines einzigen einstückigen Teils sind.

5. Anschlag (1) zum Stoßabsorbieren nach einem der vorhergehenden Ansprüche, **dadurch gekennzeichnet, dass** der Träger (6) die Form eines Rohrs mit Achse um die Kompressionsachse (10) hat, und dass die Basis (2) einen Auflageflächenabschnitt aufweist, der auf einem Karosserieelement (13) des Fahrzeugs zum Aufliegen kommen kann.

6. Anschlag (1) zum Stoßabsorbieren nach einem der vorhergehenden Ansprüche, **dadurch gekennzeichnet, dass** der Anschlag (1) ein Befestigungsmittel durch Clipsen auf einem Karosserieelement (13) aufweist.

7. Anschlag (1) zum Stoßabsorbieren nach einem der vorhergehenden Ansprüche, **dadurch gekennzeichnet, dass** das Dämpforgan (3) zumindest teilweise aus biegsamem Elastomerwerkstoff besteht.

8. Anschlag (1) zum Stoßabsorbieren nach einem der vorhergehenden Ansprüche, **dadurch gekennzeichnet, dass** die Basis und der Träger aus Metall bestehen.

9. Anwenden eines Anschlags (1) nach einem der vorhergehenden Ansprüche auf das Absorbieren eines Stoßes eines Fußgängers auf eine Motorhaube (12) eines Kraftfahrzeugs, bei dem die Motorhaube (12) in Bezug auf ein Karosserieorgan (13) zu beiden Seiten einer Schließstellung der Motorhaube beweglich ist, wobei der Anschlag (1) zwischen die Motorhaube (12) und das Karosserieelement (13) eingefügt ist, und wobei das Dämpfelement (3) bei Fehlen von Stoß teilweise in der Schließposition der Motorhaube (12) verformt ist.
